(19) Europäisches Patentamt
European Patent Office
Office européen des brevets

(11) Publication number: 0 004 711 A2

(12) # EUROPEAN PATENT APPLICATION

(21) Application number: 79300357.5

(22) Date of filing: 08.03.79

(51) Int. Cl.$^2$: C 08 L 21/00
C 08 K 5/36, C 08 K 5/50

(30) Priority: 04.04.78 GB 1312578

(43) Date of publication of application: 17.10.79 Bulletin 79/21

(84) Designated Contracting States: DE FR GB IT

(71) Applicant: Vulnax International Limited
PO Box 225
London SW1P 3JF(GB)

(72) Inventor: Ashworth, Brian Thomas
5 Vicarage Road South Castleton
Rochdale Lancs OL11 2TN(GB)

(72) Inventor: Brooks, John Langshaw
87 Breeze Hill Road
Oldham Lancs.(GB)

(72) Inventor: Harper, David John
722 Blackburn Road
Bolton Lancs EL1 7JG(GB)

(74) Representative: Smith, Benjamin Thomas et al,
Imperial Chemical Industries Limited Legal Department: Patents Thames House North Millbank
London SW1P 4QG(GB)

(54) **Process for the cross-linking of polymers.**

(57) In the cross-linking of polymers containing ethylenic unsaturation, especially natural and synthetic rubbers of the isoprene or styrene-butadiene series, S-acyl derivatives of N-substituted thiohydroxylamines, previously known to be useful as accelerators for vulcanisation by sulphur or sulphur donors, can be used themselves as sole vulcanisation agents.

The preferred compounds for this purpose are the N-dithiocarbamoyl derivatives of amines, amides or imides, e.g. S-(N',N'-dimethylamino)-N,N-dimethyldithiocarbamate, S-(acetylamino) N,N-diethyldithiocarbamate or S-(phthalimido)-di-*n*-butyldithiocarbamate. Typical advantages of the resultant rubbers are better resistance to heat ageing and resistance to compression set when compared with sulphur cured rubbers and greater processing safety than TMTD-cured rubbers.

EP 0 004 711 A2

This invention relates to a process for the cross-linking of polymers. Whilst not limited thereto, the new process is particularly valuable for the cross-linking or vulcanisation of natural and/or synthetic rubbers.

The term "rubbers" as used herein is intended to refer to the natural or synthetic polymers having a carbon-carbon backbone and ethylenic unsaturation. Such polymers, as is well-known, are commonly cross-linked by heating in intimate mixture with sulphur or polysulphide compounds the reaction being assisted by "accelerators", e.g. mercaptobenzthiazole or diphenylguanidine, which assist the cross-linking reaction.

However in some applications improved properties are required over and above those which can be obtained with cross-linking systems containing elemental sulphur. Improvements for instance in reversion resistance are required in isoprene-based rubbers and in both butadiene-based and isoprene-based rubbers, improvements are required in both resistance to heat and compressing set.

It has now been found that S-acyl derivatives of N-substituted thioamines or of thioamides are valuable cross-linking agents for use in the vulcanisation of rubbers and many other polymers, the term "acyl" being used to signify an acid radical of an organic or inorganic acid having the group C=Y, P=Y or S=X where X is O or S and Y is O or S or an imide group, linked to the S atom. The invention includes the use of polyacyl derivatives of polyfunctional acids of the above types.

The use of many S-acyl derivatives of thioamines or thioamides, as defined above, in the vulcanisation of rubber has been described in a variety of publications, but to the best of our knowledge and belief, this use has always been carried out in association with known vulcanising agents, e.g. sulphur, to act as the cross-linking agent, the acyl derivative of the thioamine or thioamide being added to function in a separate manner, usually as an accelerator of the vulcanisation process. In contrast to these known uses, our invention lies in the discovery that these S-acyl, S,N-diacyl and S,N,N-triacyl derivatives of thioamines are effective vulcanising agents themselves for natural rubber and synthetic rubbers containing olefinic unsaturation, in the absence of known vulcanising agents such as elemental sulphur or polysulphide compounds which can be used in place of sulphur in the vulcanisation process.

Examples of acyl groups are:

$R^1R^2N.CS-$

$R^1O.CS-$

$R^1S.CS-$

$R^1R^2NC(=NR^2)-$

$R^1R^2N.CO-$

$R^1O.CO-$

$R^2.CO-$

$R^1.CS-$

$R^1.SO_2-$

$R^3.SO_2$-

$(R^1O)_2PO$-

$(R^1O)_2PS$-

-CO-A-CO-

-PS.$OR^1$-

-$SO_2$-A-$SO_2$-

-PO.$OR^1$-

-CS-A-CS-

-PO.($OR^1$)-A-PO.($OR^1$)-

wherein $R^1$ represents an optionally substituted hydrocarbyl radical, $R^2$ represents H or an optionally substituted hydrocarbyl radical, $R^3$ represents O- or $R^2$O-, $R^2$ having the above meaning, and A represents an alkylene, arylene or aralkylene linking group.

As examples of optionally substituted hydrocarbyl there may be mentioned alkyl, cycloalkyl, aralkyl, and aryl, which may contain substituents e.g., hydroxyl, alkoxy and/or halogen.

As examples of alkyl groups, there may be mentioned methyl, ethyl, iso- and n-propyl, n-, i- and t-butyl, n-hexyl, i-octyl, n-dodecyl and n-octadecyl.

As examples of cycloalkyl and aralkyl, there may be mentioned cyclohexyl and benzyl.

As examples of aryl, there may be mentioned phenyl, tolyl, 2,4- and 2,5-xylyl and 1- and 2-naphthyl.

As examples of substituted alkyl, or substituted aryl, there may be mentioned hydroxyethyl, chlorophenyl, nitrophenyl, hydroxyphenyl.

As examples of alkylene, arylene and aralkylene represented by A, there may be mentioned ethylene, trimethylene, tetramethylene, hexamethylene, o-, m- and p-phenylene, benzylene and xylylene.

As examples of compounds whose use falls within the invention, there may be mentioned:

A. S-thiocarbamoyl derivatives of thiohydroxylamines of the formula:

$R^1.R^2N.CS.S.NR^4.R^5$ (1)

$R^1.R^2N.CS.S.NR^5.A.NR^5.S.CS.NR^2.R^1$ (2)

$R^4.R^5N.S.CS.NR^5.A.NR^5.CS.S.NR^4.R^5$ (3)

wherein $R^1$, $R^2$ and A have the meanings stated above, $R^4$ and $R^5$ may be the same or different and each represents an acyl group or any of the meanings stated for $R^2$, any pair of $R^1$ and $R^2$ or $R^4$ and $R^5$ attached to a nitrogen atom can represent an alkylidene or arylidene radical, or together with the nitrogen atom can form a heterocyclic ring, or the radical $-NR^5.A.NR^5.-$ can form a N,N'-divalent heterocyclic radical, e.g. N,N'-piperazinyl.

As examples of alkylidene or arylidene groups represented by $R^1$ and $R^2$ together or $R^4$ and $R^5$ together, there may be mentioned ethylidene, isopropylidene and benzylidene.

As examples of heterocyclic rings formed by the joining of $R^1$ and $R^2$ or $R^4$ and $R^5$ there may be mentioned N-piperidyl and N-morpholyl.

As particular examples of compounds of formulae (1), (2) and (3) there may be mentioned:

S-(Dimethylthiocarbamoyl)-N,N-dimethylthiohydroxylamine,

Piperazine-N,N'-bis-(diethyldithiocarbamate)

S-(2,2'-oxydiethylenethiocarbamoyl)-N,N-(2,2'-oxydiethylene) thiohydroxylamine

N,N'-bis-[N-(S-phenyldithiocarbamoyl)]-1,2-ethylenediamine,

S-(N-phenyl-N-methylthiocarbamoyl)-N-(salicylidene) thiohydroxylamine,

S-acetylamino-N,N-diethyldithiocarbamate

S-butyrylamino-N,N-dicyclohexyldithiocarbamate

S-lauroylamino-N,N-diphenyldithiocarbamate

S-propionylamino-N-ethyl-N-butyldithiocarbamate

S-tosylamino-N,N-pentamethylene dithiocarbamate

S-tosylamino-N,N-diethyleneoxy dithiocarbamate

S-benzene-sulphonylamino-N-ethyl-N-phenyldithiocarbamate

S-octadecanoylamino-N,N-dimethyldithiocarbamate

S-(4-nitrobenzoyl)amino-N,N-diphenyldithiocarbamate

S-(4-methoxybenzoyl)amino-N-phenyl-N-ethyl-dithiocarbamate

S-(N-methyl-N-benzoylamino)-N,N-diethyldithiocarbamate

S-(N-phenyl-N-acetylamino)-N,N-di-n-hexyldithiocarbamate

S-(N-octyl-N-benzoylamino)-N,N-dimethyldithiocarbamate

S-(benzenesulphonylamino)-N,N-diphenyldithiocarbamate

S-(N'-cyclohexyl-N'-benzenesulphonylamino)-N,N-dimethyldithiocarbamate

S-benzoylamino-N,N-diethyldithiocarbamate

S-benzenesulphonylamino-N,N-diethyldithiocarbamate

Sodium-N-(N',N'-diethylthiocarbamoylthio)sulphamate

Methyl-N-(N'-phenyl-N'-methylthiocarbamoylthio)carbamate

1,2-bis(benzenesulphonylaminothio-thiocarbonylamino)-ethane

S-dimethylthiocarbamoyl-N,N-dimethyldithiocarbamate

S-(N",N"-di-n-butylureido)-N,N-diethyldithiocarbamate

N,N'-bis-(dimethyldithiocarbamoyl)terephthaldiamide

N,N'-bis-[S-(acetylamino)dithiocarboxy]piperazine

1,4-bis-[N-(N',N'-diethylthiocarbamoylthio)carbamoyl]butane

S-(O,O'-diethylphosphoramido)-N,N-dimethyldithiocarbamate

1,2-bis[N'-(N",N"-diphenylthiocarbamoylthio)thioureido] ethane

S-diacetylamino-N,N-diethyldithiocarbamate

S-dibenzoylamino-N,N-di-n-butyldithiocarbamate

S-(N-acetylbenzenesulphonylamino)-N,N-dimethyldithiocarbamate

S-(di-p-toluenesulphonylamino)-N,N-piperidinodithiocarbamate

N,N'-bis-[(S-benzoylaminothio)thiocarbonyl]piperazine

S-phthalimido-N,N-dimethyldithiocarbamate

N-(N',N'-dimethyldithiocarbamoyl)phthalimide.

Compounds of class A above form a preferred class for use in the new process.

B. Dithiocarbonate derivatives of the formulae:

$R^1O.CS.S.NR^4.R^5$ (4)

$R^1O.CS.S.NR^5.A.NR^5.S.CS.OR^1$ (5)

$R^4.NR^5.S.CS.O.A.O.CS.S.NR^4.R^5$ (6)

wherein $R^1$, $R^4$, $R^5$ and A have the meanings stated above.

As particular examples of these, there may be mentioned:

S-dimethylamino-O-ethyldithiocarbonate

S-(N-methylanilino)-O-n-butyldithiocarbonate

N,N'-bis-(O-phenyldithiocarbonato)-N,N'-dimethylethylene diamine

1,4-bis-O-(S-dimethylaminodithiocarbonato)butane

S-isopropylidenamino-O-n-octyl dithiocarbonate

S-benzoylamino-O-ethyldithiocarbonate

S-methanesulphonyl-O-n-butyldithiocarbonate

n-octyl-N-(O'-p-tolylxanthyl)carbamate

2,2'-bis-[(thioacetylaminothio)thiocarbonyloxy]-diethylether

1,4-bis-[N-(O-ethylxanthyl)carbamoyl]butane
O-*n*-octyl-S-dibenzoylaminodithiocarbonate
N-[S-(methoxythiocarbonyl)thio]maleimide
S-(N,N-dibenzoylamino)-O-ethyl-dithiocarbonate
O-ethyl-S-phthalimidodithiocarbonate

C. Trithiocarbonate derivatives of the formulae:

$R^1S.CS.S.NR^4.R^5$ (7)

$R^1S.CS.S.NR^5.A.NR^5.S.CS.SR^1$ (8)

$R^4.R^5N.S.CS.S.A.S.CS.S.NR^4.R^5$ (9)

wherein $R^1$, $R^4$, $R^5$ and A have the meanings stated above, and especially where $R^5$ represents an acyl group.

As particular examples of these, there may be mentioned:

S-ethyl-S'-(N-methylanilino)trithiocarbonate
1,6-hexane-bis-N-(S-phenyl-S'-aminotrithiocarbonate)
1,4-butane-bis-[S-(S'-dimethylamino)trithiocarbonate]
1,3-bis-[phenylthio thiocarbonyl thiosulphamoyl]benzene

D. S-aminothiourea derivatives of the formulae:

$R^1.R^2N.C(=NR^2).S.NR^4.R^5$ (10)

$R^1.R^2N.C(=NR^2).S.NR^5.A.NR^5.S.C(=NR^2).NR^1R^2$ (11)

$R^4.R^5N.S.C(=NR^2).NR^2.A.NR^2.C(=NR^2).S.NR^5.R^4$ (12)

wherein $R^1$, $R^2$, $R^4$, $R^5$ and A have the meanings stated above.

As particular examples of these, there may be mentioned:

N-phenyl-N',N'-dimethyl-S-(dimethylamino)isothiourea
N,N'-diphenyl-S-anilinoisothiourea
ethane-bis-(S-amino-N,N'-diphenylisothiourea)
1,4-benzene-bis-(N'-phenyl-S-dimethylaminoisothiourea).

E. S-aminocarbonylthiohydroxylamines of the formulae:

$R^1.NR^2.CO.S.NR^4.R^5$ (13)

$R^1.NR^2.CO.S.NR^5.A.NR^5.S.CO.NR^2.R^1$ (14)

$R^4.NR^5.S.CO.NR^2.A.NR^2.CO.S.NR^5.R^4$ (15)

wherein $R^1$, $R^2$, $R^4$, $R^5$ and A have the meanings stated above.

As particular examples of these, there may be mentioned:

S-(N-methyl-N-ethylaminocarbonyl)-N-methyl-N-phenyl thiohydroxylamine

N,N'-bis-(dimethylaminocarbonylthio)piperazine

1,4-benzene-bis-(S-dimethylamino-N-methylthiocarbamate)

S-benzoylamino-N,N-diethylthiocarbamate

1,4-bis-[S-(n-butoxycarbonylamino)thiocarbonylamino]butane

1,6-bis-[N'-(N",N"-diethylcarbamoylthio)ureido]hexane

S-di(benzenesulphonyl)amino-N,N-di-n-propylthiocarbamate.

F. S-hydrocarbyloxycarbonyl thiohydroxylamines of the formulae:

$R^1.O.CO.S.NR^5.R^4$ (16)

$R^1.O.CO.S.NR^5.A.NR^5.S.CO.OR^1$ (17)

$R^5.NR^4.S.CO.O.A.O.CO.S.NR^5.R^4$ (18)

e.g.:

S-dodecyloxycarbonyl-N-ethyl-N-octylthiohydroxylamine

1,4-butane-bis-[S-(dimethylamino)thiocarbonate]

1,2-ethylene-bis-[S-(benzylideneamino)thiocarbonate]

1,2-di-(N-methyl-N-ethoxycarbonylthio)ethane

phenyl-N-(ethoxycarbonylthio)carbamate

1,2-bis-[S-(N',N'-diethylureido)thiocarbonyloxy]propane

1,6-bis-[N-(ethoxycarbonylthio)thiocarbamoyloxy]hexane

S-diacetylamino-O-ethylthiocarbonate.

G. S-aminomonothiocarboxylates of the formulae:

$R^1.CO.S.NR^5.R^4$ (19)

$R^1.CO.S.NR^5.A.NR^5.S.CO.R^1$ (20)

$R^5.NR^4.S.CO.A.CO.S.NR^5.R^4$ (21)

e.g.:

S-anilinomonothiobenzoate
S,S'-bis-(di-n-butylamino)dithioadipate
N,N'-di-(acetylthio)ethylene diamine
S-benzenesulphonylaminothiobenzoate
S-benzenesulphonylaminothioacetate
N-(n-heptoylthio)-N'-methyl-N'-phenylthiourea
S-thiobenzoylamino-p-hydroxythiobenzoate
S,S'-bis(N',N'-dimethylureido)dithioterephthalate
1,2-bis-[N-(ethoxycarbonylthio)thiocarbamoyloxy]hexane
S,N,N-triacetyl thiohydroxylamine
S-benzoyl-N,N-dibenzenesulphonylthiohydroxylamine
N-(S-propionylthio)succinimide.

H. S-aminodithiocarboxylates of the formulae:

$R^1.CS.S.NR^5.R^4$ (22)

$R^5.NR^4.S.CS.A.CS.S.NR^5.R^4$ (23)

$R^1.CS.S.NR^5.A.NR^5.S.CS.R^1$ (24)

e.g.:

S-(salicylideneamino)dithiobenzoate
S-piperidinodithiopropionate
1,4-di-(S-dimethylaminodithiocarboxy)benzene
1,2-di-(N-dithiobenzoylamino)ethane
S-benzenesulphonylaminodithiobenzoate
S-tosylaminodithiopropionate

N-(thioacetylthio)-S-t-butyldithiocarbamate
S-benzoylaminodithiopropionate
methyl-N-(thioacetylthio)carbamate
n-butyl-N-(thiobenzoylthio)carbamate
N'-(thioacetylthio)-N,N-di-n-butylurea
1,2-bis-[N-(thioacetylthio)thiocarbamoylthio]ethane
1,4-bis-[(ethoxythiocarbonylaminothio)thiocarbonyl]butane
1,4-bis-[N-(thiobenzoylthio)carbamoyloxy]butane
N-(S-thiobenzoylthio)maleimide

I. S-sulphonylthiohydroxylamines of the formulae:

$R^1.SO_2.S.NR^5.R^4$ (25)

$R^5.NR^4.S.SO_2.A.SO_2.S.NR^5.R^4$ (26)

$R^1.SO_2.S.NR^5.A.NR^5.S.SO_2.R^1$ (27)

e.g.:

S-dimethylamino-4-methylbenzenethiosulphonate
1,5-di-(S-dimethylamino-thiosulphonyl)naphthalene
1,4-di-(N-benzenesulphonylthioamino)benzene
S,N-di-(benzenesulphonyl)thiohydroxylamine
1,4-bis-[N-(benzenesulphonylthio)thiocarbamoyl]butane
1,3-bis-[(n-hexylthiothiocarbonylamino)thiosulphonyl]benzene
N-(S-benzenesulphonylthio)dibenzamide
S,N,N-tri(benzene sulphonyl)thiohydroxylamine
N-(S-methanesulphonylthio)phthalimide.

J. S-aminothiosulphates of the formulae:

$R^3.SO_2.S.NR^5.R^4$ (28)

$R^3.SO_2.S.NR^5.A.NR^5.S.SO_2.R^3$ (29)

wherein $R^3$, $R^4$, $R^5$ and A have the meanings stated above,

e.g.:

O-phenyl-S-dimethylaminothiosulphate

Potassium-S-diphenylaminothiosulphate

O-ethyl-S-diethylaminothiosulphate

Potassium-S-dimethylaminothiosulphate

1,2-bis-(ethoxysulphonylthioamino)ethane

Potassium-S-(benzoylamino)thiosulphate

Calcium-S-(acetylamino)thiosulphate

Calcium-S-(n-pentanoylamino)thiosulphate

Dipotassium-N,N'-dithiosulphatoterephthaldiamide.

K. S-aminothiophosphates of the formulae:

$(R^1O)_2.PO.S.NR^5.R^4$ (30)

$R^5.NR^4.S.PO(OR^1).O.A.O.PO(OR^1).S.NR^5.R^4$ (31)

$(R^1O)_2.PO.S.NR^5.A.NR^5.S.PO.(OR^1)_2$ (32)

wherein $R^1$, $R^4$, $R^5$, and A have the meanings stated above, e.g.:

O,O'-diethyl-S-(N-ethylanilino)thiophosphate

1,4-butane-bis-(O-ethyl-S-dimethylaminothiophosphate)

1,4-di-[N-(O,O'-diethylthiophosphonyl)-N-methylamino] benzene

S-(Phthalimido)-O,O'-diethylthiophosphate

S-(maleimido)-O,O'-diethyldithiophosphate.

L. S-amidodithiophosphates of the formulae:

$(R^1O)_2.PS.S.NR^5.R^4$ (33)

$R^5.NR^4.S.PS.(OR^1).O.A.O.PS.(OR^1).NR^5.R^4$ (34)

$(R^1O)_2.PS.S.NR^5.A.NR^5.S.PS.(OR^1)_2$ (35)

wherein $R^1$, $R^4$, $R^5$ and A have the meanings stated above,

e.g.:

O,O'-diphenyl-S-n-octylaminodithiophosphate

1,4-di-(S-diethylamino-O-ethyl-dithiophosphoryl)butane

1,4-di-[N-methyl-N-(O,O'-diethyldithiophosphonyl)amino] benzene.

As examples of polymers which may be cross-linked in accordance with the invention, there may be mentioned natural and synthetic polyisoprene, and other isoprene-containing copolymers, polybutadiene and styrene-butadiene copolymers and ethylene-propylene-diene copolymers.

The cross-linking agents may be incorporated into the polymer by blending with the polymer in any conventional manner, for example, on a two-roll mill. The polymer is thereafter shaped, e.g. in a mould, and heated to a temperature above 100°C and preferably between 140°C and 200°C, to bring about cross-linking.

The polymer mixtures may also contain other conventional additives; as examples of such additives there may be mentioned zinc oxide, stearic acid, which increase respectively the extent and rate of cross-linking, also fillers, e.g. silica, carbon black and diatomaceous earths, pigments and antioxidants.

In particular, the rate or extent of cross-linking can be modified by the addition of small amounts, e.g. 0.1 - 5%, preferably 0.1-2%, by weight of the polymer, of compounds useful as curing accelerators in vulcanisates using sulphur or sulphur donors, e.g. dithiocarbamates and their metal salts also thiurams, thiazoles, sulphenamides and guanidines.

The amount of cross-linking agent used will normally be from 1 part to 10 parts by weight per hundred parts by weight of the polymer; the use of other proportions is, however, possible.

The invention may be illustrated by the following, in which parts are by weight:

Examples 1-36

The masterbatch detailed below was prepared in a conventional manner in an internal mixer.

| | Parts by weight |
|---|---|
| Solution polymerised Styrene Butadiene Rubber (Solprene 1204) | 100 |
| High Abrasion Furnace Black (N 330) | 50 |

The compounds named in Table I were then added to separate portions of this masterbatch on a two roll mill at 70°C in an amount of 4% based on the rubber content. A corresponding series were prepared containing 4% of the compound and 4% of zinc diethyldithiocarbamate.

The compounded stocks were tested for cross-linking activity at 190°C using an oscillating disc rheometer. The results are given in Table 1, in which column 2 names the compound, column 3 gives the peak torque in lbs. and column 4 the time, in minutes, to 95% peak torque. The even-numbered examples are the second series mentioned i.e. containing zinc diethyldithiocarbamate.

The results demonstrate that the compounds named cross link SBR, the presence of zinc diethyldithiocarbamate leading to higher state of cross-linking and quicker attainment of peak torque.

Table 1

| Example No. | | | |
|---|---|---|---|
| 1 | S-Benzenesulphonylamino-diethyldithiocarbamate | 51 | 31 |
| 2 | " | 71 | 2.2 |
| 3 | S-Benzoylaminodiethyldithiocarbamate | 40 | 45 |
| 4 | " | 72 | 4.2 |
| 5 | Potassium benzoyl aminothiosulphate | 56 | 27 |
| 6 | " | 73 | 5 |
| 7 | Benzenesulphonylaminothiobenzoate | 33 | 28 |
| 8 | " | 43 | 5 |
| 9 | Benzenesulphonylaminodithiobenzoate | 61 | 25 |
| 10 | " | 65 | 2.2 |
| 11 | S-octanoylamino-N,N-diethyldithiocarbamate | 27 | 27.5 |
| 12 | " | 56 | 2.5 |
| 13 | Acetylamino-N,N-diethyldithiocarbamate | 38 | 25 |
| 14 | " | 55 | 3.8 |
| 15 | 1,4-bis-[N',N'-diethylthiocarbamoylthio carbamoyl]butane | 33 | 23 |
| 16 | " | 71 | 2.1 |

Table 1 (continued)

| Example No. | | | |
|---|---|---|---|
| 17 | S-benzoylamino-N,N-di(n)-butyldithiocarbamate | 37 | 20 |
| 18 | " | 58 | 2.4 |
| 19 | S-benzoylamino-N-phenyl-N-methyldithiocarbamate | 30 | 28 |
| 20 | " | 64 | 2.4 |
| 21 | S-benzoylamino-N,N-(2,2'-diethyleneoxy)dithiocarbamate | 34 | 24 |
| 22 | " | 68 | 10 |
| 23 | S-benzoylamino-N,N-(1,5-pentamethylene)dithiocarbamate | 39 | 24 |
| 24 | " | 63 | 1.5 |
| 25 | S-benzenesulphonylaminodibutyldithiocarbamate | 46 | 9.2 |
| 26 | " | 71 | 2.7 |
| 27 | S-benzenesulphonylamino-N-phenyl-N-methyldithiocarbamate | 35 | 50 |
| 28 | " | 64 | 2.5 |
| 29 | S-benzenesulphonylamino-N,N-(2,2'-diethyleneoxy) dithiocarbamate | 40 | 52 |
| 30 | " | 70 | 2.5 |
| 31 | S-benzenesulphonylamino-N,N-(1,5-pentamethylene) dithiocarbamate | 44 | 44 |
| 32 | " | 73 | 2.0 |

Table 1 (Continued)

| Example No. | | | |
|---|---|---|---|
| 33 | S-methylsulphonylamino-N,N-di-n-butyldithiocarbamate | 40 | 27 |
| 34 | " | 67.5 | 3.4 |
| 35 | S-(m-nitrophenylsulphonylamino)-N,N-(1,5-pentamethylene)dithiocarbamate | 56 | 27 |
| 36 | " | 77 | 5 |

Examples 37-60

A series of mixes were made up as for Example 1, but using the additives described in Tables 2, 3 and 4 which also set out the results of testing for cross-linking at 160°C and in some cases 190°C (Examples 46 and 47) in an oscillating disc rheometer.

TABLE 2

| Base Mix | Parts by weight |
|---|---|
| Styrene/butadiene rubber | 100 |
| High abrasion furnace black | 50 |

| | Example No. | | | | | | | | |
|---|---|---|---|---|---|---|---|---|---|
| | 37 | 38 | 39 | 40 | 41 | 42 | 43 | 44 | 45 |
| N-[S-(morpholinothiocarbonyl)thio]morpholine | 4 | | | | | | | | |
| S-(dimethylthiocarbamoyl)-N,N-dimethylthio hydroxylamine | | 4 | 4 | | | | | | |
| S-(diethylthiocarbamoyl)-N,N-diethylthio hydroxylamine | | | | 4 | 4 | | | | |
| S-(diethylthiocarbamoyl)-N,N-dimethylthio hydroxylamine | | | | | | 4 | 4 | | |
| O-ethyl-S-(N,N-diethylamino)dithiocarbonate | | | | | | | | 4 | 4 |
| Zinc diethyldithiocarbamate | - | - | 1 | - | 1 | - | 1 | - | 1 |
| Rheometer 160°C | | | | | | | | | |
| Induction time ($T_2$) | 4.3 | 8.5 | 4.0 | 13.5 | 14.0 | 11.4 | 6.7 | 6.8 | 3.0 |
| Peak torque (m.lb.) | 91 | 57 | 91 | 29 | 53 | 36 | 72 | 41 | 69 |
| Time to 95% cross linking (mins.) | 20.1 | 17.0 | 13.0 | 51.5 | 28.3 | 18.4 | 21.7 | 54.5 | 21.5 |

Table 3

| Base Mix | Parts by weight |
|---|---|
| Styrene/butadiene rubber (Solprene 1204) | 100 |
| High abrasion furnace black | 50 |

| | EXAMPLE No. | | | | | |
|---|---|---|---|---|---|---|
| | 46 | 47 | 48 | 49 | 50 | 51 |
| S-dibenzoylamino-O-ethyldithiocarbonate | 4 | 4 | | | | |
| N-(N-diethyldithiocarbamoyl)phthalimide | | | 4 | 4 | | |
| O-ethyl-S-phthalimido dithiocarbonate | | | | | 4 | 4 |
| Zinc diethyldithiocarbamate | - | 1 | - | 1 | - | 1 |
| | RHEOMETER AT | | | | | |
| | 190°C | 190°C | 160°C | 160°C | 160°C | 160°C |
| Induction time $T_2$ (mins.) | 3.9 | 0.8 | 15.0 | 6.1 | 29.0 | 4.7 |
| Peak torque (m.lb.) | 27 | 76 | 28 | 36 | 27.2 | 56.9 |
| Time to 95% cross-linking (mins.) | 12.5 | 2.2 | 32.0 | 26.5 | 54.1 | 43.7 |

Table 4

| | EXAMPLE No. | | | | | | | | |
|---|---|---|---|---|---|---|---|---|---|
| | 52 | 53 | 54 | 55 | 56 | 57 | 58 | 59 | 60 |
| S-benzenesulphonylamino-diethyldithiocarbamate | 4 | 4 | 4 | 4 | 4 | 4 | 4 | 4 | 4 |
| Diphenylguanidine | 1 | | | | | | | | |
| Zinc salt of 2-mercaptobenzthiazole | | 1 | | | | | | | |
| Copper salt of 2-mercaptobenzthiazole | | | 1 | | | | | | |
| N-cyclohexylbenzthiazolesulphonamide | | | | 1 | | | | | |
| Zinc diethyldithiocarbamate | | | | | 1 | | | | |
| Zinc di-n-butyl dithiocarbamate | | | | | | 1 | | | |
| Zinc N-pentamethylene dithiocarbamate | | | | | | | 1 | | |
| Tetramethylthiuramdisulphide | | | | | | | | 1 | |
| Tetramethylthiurammonosulphide | | | | | | | | | 1. |
| Rheometer 160°C | | | | | | | | | |
| Time (minutes) to 95% crosslinking | 7.3 | 15.5 | 10.5 | 6.6 | 11.2 | 13.0 | 15.2 | 25.5 | 26.5 |
| Peak torque (in lb.) | 66 | 80 | 77 | 78 | 86 | 89 | 97 | 98 | 83 |

Examples 61-68

The masterbatch detailed below was prepared in a conventional manner in an internal mixer.

| | Parts |
|---|---|
| Natural rubber smoked sheet | 100 |
| zinc oxide | 3.5 |
| stearic acid | 3.0 |
| high abrasion furnace black | 45.0 |
| process oil | 3.5 |

Curatives as detailed in Table 5 were then added to separate portions of the masterbatch on a two-roll mill and the compounded stocks were tested for cross-linking at 150°C using an oscillating disc rheometer. The results are also given in Table 5.

Table 5

| | EXAMPLE No. | | | | | | | |
|---|---|---|---|---|---|---|---|---|
| | 61 | 62 | 63 | 64 | 65 | 66 | 67 | 68 |
| S-benzenesulphonylamino-diethyldithiocarbamate | 4 | 4 | 4 | 4 | - | - | - | - |
| S-benzoylaminodiethyl-dithiocarbamate | - | - | - | - | 4 | 4 | 4 | 4 |
| zinc diethyldithio carbamate | - | 1 | - | - | - | 1 | - | - |
| tetramethylthiuram disulphide | - | - | 1 | - | - | - | 1 | - |
| N-cyclohexyl-2-benz-thiazolesulphenamide | - | - | - | 1 | - | - | - | 1 |
| Rheometer 150°C | | | | | | | | |
| Time (minutes) to 95% crosslinking | 20.0 | 15.7 | 13.5 | 15.2 | 12.5 | 10.7 | 12.5 | 14.0 |
| Peak torque (in lb.) | 49 | 50 | 60 | 36.5 | 36.8 | 47.4 | 54.9 | 46.2 |

Examples 69-83

The masterbatch detailed below was prepared in a conventional manner in an internal mixer.

| | Parts by weight |
|---|---|
| Natural rubber (SMR 5) | 100 |
| High Abrasion Furnace Black | 50 |

Curatives as detailed in Tables 6 and 7 were then added to separate portions of the masterbatch on a two-roll mill and the compounded stocks were tested for cross-linking at 155°C using an oscillating disc rheometer. The results are given in Tables 6 and 7.

Table 6

| | EXAMPLE No. | | | | | | | | |
|---|---|---|---|---|---|---|---|---|---|
| | 69 | 70 | 71 | 72 | 73 | 74 | 75 | 76 | 77 |
| N-[S-(morpholinothiocarbonyl)thio]morpholine | 4 | | | | | | | | |
| S-(dimethylthiocarbamoyl)-N,N-dimethylthio hydroxylamine | | 4 | 4 | | | | | | |
| S-(diethylthiocarbamoyl)-N,N-diethylthio hydroxylamine | | | | 4 | 4 | | | | |
| S-(diethylthiocarbamoyl)-N,N-dimethylthio hydroxylamine | | | | | | 4 | 4 | | |
| O-ethyl-S-(N,N-diethylamino)dithiocarbonate | | | | | | | | 4 | 4 |
| Zinc diethyldithiocarbamate | - | - | 1 | - | 1 | - | 1 | - | 1 |
| Rheometer 155°C | | | | | | | | | |
| Induction time ($T_2$) | 5.5 | 8.0 | 7.0 | 28.5 | 11.2 | 17.0 | 8.4 | 5.9 | 2.8 |
| Peak torque (m.lb.) | 52 | 54 | 61 | 32 | 50 | 45 | 62 | 35 | 49 |
| Time to 95% cross-linking (mins) | 1.4 | 10.0 | 15.0 | 35.5 | 42.2 | 24.5 | 29.2 | 10.5 | 6.4 |

Table 7

| | EXAMPLE No. | | | | | |
|---|---|---|---|---|---|---|
| | 78 | 79 | 80 | 81 | 82 | 83 |
| S-dibenzoylamino-O-ethyldithiocarbonate | 4 | 4 | | | | |
| N-(N-diethyldithiocarbamoyl)phthalimide | | | 4 | 4 | | |
| O-ethyl-S-phthalimido dithiocarbonate | | | | | 4 | 4 |
| Zinc diethyldithiocarbamate | - | 1 | - | 1 | - | 1 |
| | RHEOMETER AT | | | | | |
| | 190°C | 190°C | 150°C | 150°C | 150°C | 150°C |
| Induction time $T_2$ (mins) | no cure | 0.8 | no cure | 7.8 | no cure | 6.0 |
| Peak torque (m.lb.) | no cure | 38.0 | no cure | 34.0 | no cure | 46.9 |
| Time to 95% cross-linking (mins) | no cure | 2.0 | no cure | 20.0 | no cure | 21.5 |

Examples 84-215

The masterbatches based on styrene butadiene rubber (SBR) and natural rubber (NR), as detailed below, were prepared in a conventional manner in a laboratory scale internal mixer.

| | A | B | C | D |
|---|---|---|---|---|
| Natural Rubber (SMR 5) | 100 | 100 | - | - |
| SBR (Solprene 1204) | - | - | 100 | 100 |
| High Abrasion Furnace Black | 50 | 45 | 50 | 50 |
| Zinc oxide | - | 3.5 | - | 3.0 |
| Stearic acid | - | 3.0 | - | 2.0 |
| Process Oil | - | 3.5 | - | 10.0 |

The compounds named in the tables were then added to separate portions of these masterbatches on a two roll mill in the amount indicated per 100 parts of rubber.

The compounded stocks were tested for cross linking activity, using an oscillating disc rheometer, at the temperatures indicated in the tables. The results obtained are recorded in the bottom 3 lines.

Table 8

| Master batch | Compound | 84 | 85 | 86 | 87 | 88 | 89 | 90 | 91 | 92 | 93 | 94 |
|---|---|---|---|---|---|---|---|---|---|---|---|---|
| A | S-methanesulphonylamino-O-butyldithiocarbonate | 4 | 4 | | | | | | | | | |
| A | S-benzenesulphonylamino-O-nonyldithiocarbonate | | | 4 | | | | | | | | |
| A | 1,4-di-[(s-tosylamino)-dithiocarbonato-O-]butane | | | | 4 | | | | | | | |
| A | S-octanoylamino-O-butyldithiocarbonate | | | | | 4 | | | | | | |
| A | S-benzenesulphonylamino-o-isopropyldithiocarbonate | | | | | | 4 | | | | | |
| A | N,N'-di(O-butyldithio-carbonato)adipamide | | | | | | | 4 | | | | |
| A | 1,4-di[(S-benzoylamino)dithiocarbonato-O-]butane | | | | | | | | 4 | | | |
| A | 1,4-di[(S-octanoylamino)-dithiocarbonato-O-]butane | | | | | | | | | 4 | | |
| A | 1,4-di[(S-methanesulphonyl amino)dithiocarbonato-O-] butane | | | | | | | | | | 4 | 4 |
| | Zinc diethyl dithiocarbamate | - | 4 | 4 | 4 | 4 | 4 | 4 | 4 | 4 | - | 4 |
| Rheometer: | Test Temperature (°C) | 190 | 190 | 190 | 190 | 190 | 190 | 190 | 190 | 190 | 190 | 190 |
| | $T_2$ (mins) | 3.1 | 0.7 | 1.1 | 0.7 | 1.0 | 0.9 | 0.8 | 0.8 | 0.7 | 2.2 | 0.5 |
| | $T_{95}$ (mins) | 3.4 | 1.5 | 2.7 | 1.4 | 2.3 | 2.2 | 1.3 | 2.6 | 1.2 | 2.5 | 1.2 |
| | Peak torque (in lb.) | 10.0 | 45.0 | 40.0 | 40.0 | 24.0 | 33.0 | 21.0 | 52.0 | 24.0 | 19.0 | 48.0 |

Table 8 (Continued)

| Master batch | Compound | 95 | 96 | 97 | 98 | 99 | 100 | 101 | 102 |
|---|---|---|---|---|---|---|---|---|---|
| A | 4,4'-di(diethyldithiocarbamoyl-aminosulphonyl)diphenylmethane | 4 | 4 | | | | | | |
| A | S-benzenesulphonylamino-O-ethyldithiocarbonate | | | 4 | | | | | |
| A | S-benzoylamino-O-nonyl dithiocarbonate | | | | 4 | | | | |
| A | 4,4'-bis-[N-(diethyldithio-carbamoyl)aminosulphonyl] diphenylether | | | | | 4 | 4 | | |
| A | p-(N',N'-diethyldithiocarbamoyl) aminocarbonyl benzoic acid | | | | | | | 4 | 4 |
| | Zinc diethyldithiocarbamate | - | 4 | 4 | 4 | - | 4 | - | 4 |
| **Rheometer:** | | | | | | | | | |
| | Test temperature (°C) | 190 | 190 | 190 | 190 | 190 | 190 | 190 | 190 |
| | $T_2$ (mins) | 1.4 | 1.5 | 0.8 | 0.8 | 1.3 | 0.5 | 4.3 | 1.2 |
| | $T_{95}$ (mins) | 1.6 | 1.6 | 2.5 | 2.0 | 1.6 | 1.8 | 4.5 | 3.0 |
| | Peak Torque (in lb.) | 11.0 | 29.0 | 46.0 | 44.0 | 21.0 | 49.0 | 14.0 | 40.0 |

Table 9

| Master batch | Compound | 103 | 104 | 105 | 106 | 107 | 108 | 109 | 110 | 111 | 112 | 113 | 114 | 115 | 116 | 117 | 118 | 119 | 120 |
|---|---|---|---|---|---|---|---|---|---|---|---|---|---|---|---|---|---|---|---|
| B | S-methanesulphonylamino-O-butyl dithiocarbonate | 4 | 4 | | | | | | | | | | | | | | | | |
| B | S-benzenesulphonylamino-nonyl dithiocarbonate | | | 4 | 4 | | | | | | | | | | | | | | |
| B | 1,4-di-[(S-tosylamino)dithio carbonato-O-]butane | | | | | 4 | 4 | | | | | | | | | | | | |
| B | S-octanoylamino-O-butyl dithiocarbonate | | | | | | | 4 | 4 | | | | | | | | | | |
| B | S-benzenesulphonylamino-O-isopropyldithiocarbonate | | | | | | | | | 4 | 4 | | | | | | | | |
| B | N,N'-di(O-butyldithiocarbonato) adipamide | | | | | | | | | | | 4 | 4 | | | | | | |
| B | 1,4-di-[(S-benzoylamino) dithiocarbonato-O-]butane | | | | | | | | | | | | | 4 | 4 | | | | |
| B | 1,4-di-[(S-heptoylamino) dithiocarbonato-O-]butane | | | | | | | | | | | | | | | 4 | 4 | | |
| B | 1,4-di-[(S-methanesulphonylamino) dithiocarbonato-O-]butane | | | | | | | | | | | | | | | | | 4 | 4 |
| | Zinc diethyl dithiocarbamate | - | 4 | - | 4 | - | 4 | - | 4 | - | 4 | - | 4 | - | 4 | - | 4 | - | 4 |
| | Rheometer | | | | | | | | | | | | | | | | | | |
| | Test temperature (°C) | 190 | 190 | 190 | 190 | 190 | 190 | 190 | 190 | 190 | 190 | 190 | 190 | 190 | 190 | 190 | 190 | 190 | 190 |
| | $T_2$ (mins) | 3.5 | 0.9 | 1.9 | 0.2 | 1.5 | 0.7 | 6.3 | 0.8 | 1.7 | 1.0 | 2.7 | 1.4 | 3.0 | 0.7 | 4.1 | 0.8 | 1.9 | 0.4 |
| | $T_{95}$ (mins) | 12.7 | 2.3 | 10.0 | 2.6 | 13.0 | 1.4 | 13.5 | 3.1 | 13.0 | 2.4 | 13.0 | 2.7 | 47.0 | 2.5 | 14.0 | 3.0 | 13.0 | 2.6 |
| | Peak torque (in lb.) | 34.0 | 83.0 | 36.0 | 56.0 | 41.0 | 76.0 | 19.0 | 65.0 | 43.0 | 70.0 | 35.0 | 61.0 | 44.0 | 72.0 | 30.0 | 61.0 | 44.0 | 88.0 |

Table 9 (Continued)

| Master batch | Compound | 121 | 122 | 123 | 124 | 125 | 126 | 127 | 128 | 129 | 130 | 131 | 132 | 133 |
|---|---|---|---|---|---|---|---|---|---|---|---|---|---|---|
| B | 4,4'-di(diethyldithiocarbamoyl-S-amino sulphonyl)diphenylmethane | 4 | 4 | | | | | | | | | | | |
| B | S-benzenesulphonylamino-O-ethyl dithiocarbonate | | | 4 | 4 | | | | | | | | | |
| B | S-benzoylamino-O-nonyl dithiocarbonate | | | | | 4 | 4 | | | | | | | |
| B | 4,4'-bis-[N-diethyldithiocarbamoyl aminosulphonyl]diphenylether | | | | | | | 4 | 4 | | | | | |
| B | p-(N',N'-diethyldithiocarbamoyl) aminocarbonyl benzoic acid | | | | | | | | | 4 | 4 | | | |
| B | N,N'-bis[S-(benzoylamino) dithiocarbonyl]piperazine | | | | | | | | | | | 4 | 4 | |
| B | S,S'-bis[benzoylamino] dithioterephthalate | | | | | | | | | | | | | 4 |
| | Zinc diethyldithiocarbamate | - | 4 | - | 4 | - | 4 | - | 4 | - | 4 | - | 4 | - |
| | **Rheometer** | | | | | | | | | | | | | |
| | Test temperature (°C) | 190 | 190 | 190 | 190 | 190 | 190 | 190 | 190 | 190 | 190 | 190 | 190 | 190 |
| | $T_2$ (mins) | 2.0 | 0.9 | 1.7 | 0.8 | 3.3 | 0.8 | 1.6 | 0.6 | 5.3 | 1.1 | 2.3 | 0.7 | 2.5 |
| | $T_{95}$ (mins) | 12.7 | 3.7 | 9.7 | 2.7 | 13.0 | 7.0 | 13.0 | 3.0 | 13.3 | 3.2 | 12.2 | 2.9 | 16.5 |
| | Peak torque (in lb.) | 30.0 | 66.0 | 64.0 | 87.0 | 25.0 | 75.0 | 41.0 | 77.0 | 19.0 | 63.0 | 28.0 | 59.0 | 53.0 |

Table 10

| Master batch | Compound | 134 | 135 | 136 | 137 | 138 | 139 | 140 | 141 | 142 |
|---|---|---|---|---|---|---|---|---|---|---|
| C | S-dimethylamino-N-phenyl dithiocarbamate | 4 | 4 | | | | | | | |
| C | S-(diethylamino)di-n-butyl dithiocarbamate | | | 4 | 4 | | | | | |
| C | S-(O,O'-diphenylphosphoramido)-O-n-butyldithiocarbonate | | | | | 4 | | | | |
| C | S-salicylideneamino-N,N-diethyldithiocarbamate | | | | | | 4 | | | |
| C | S-[N'-acetyl-N'-tosylamino]-N,N-diethyldithiocarbamate | | | | | | | 4 | | |
| C | S-(diethylamino)-O,O-diethyl dithiophosphonate | | | | | | | | 4 | |
| C | S-(cyclohexylamino)diethyl dithiocarbamate | | | | | | | | | 4 |
| | Zinc diethyldithiocarbamate | - | 1 | - | 1 | 1 | 1 | - | - | - |
| Rheometer: | | | | | | | | | | |
| | Temperature of test (°C) | 150 | 150 | 150 | 150 | 150 | 150 | 150 | 150 | 150 |
| | $T_2$ (mins) | 1.6 | 0.9 | 19.5 | 10.0 | 4.2 | 7.9 | 2.9 | 5.6 | 23.0 |
| | $T_{95}$ (mins) | 5.4 | 3.5 | 55.0 | 52.0 | 14.0 | 43.5 | 12.0 | 10.0 | 62.0 |
| | Peak torque (in lb.) | 29.0 | 43.0 | 15.0 | 24.0 | 22.4 | 31.3 | 33.5 | 18.8 | 31.5 |

Table 10 (Continued)

| Master batch | Compound | 143 | 144 | 145 | 146 | 147 | 148 | 149 | 150 | 151 | 152 | 153 | 154 |
|---|---|---|---|---|---|---|---|---|---|---|---|---|---|
| C | S-(piperidyl-N-)1,5-pentylenedithiocarbamate | 4 | 4 | | | | | | | | | | |
| C | S-(butoxycarbonylamino)-diethyldithiocarbamate | | | 4 | 4 | | | | | | | | |
| C | S-(diethylamino)-dimethyl dithiocarbamate | | | | | 4 | 4 | | | | | | |
| C | S-piperidylpotassium thiosulphate | | | | | | | 4 | 4 | | | | |
| C | S-dimethylamino-2,2'-diethyleneoxydithio carbamate | | | | | | | | | 4 | 4 | | |
| C | Potassium-s-diethylamino thiosulphate | | | | | | | | | | | 4 | |
| C | Potassium-S-phenylamino thiosulphate | | | | | | | | | | | | 4 |
| | Zinc diethyldithio carbamate | - | 1 | - | 1 | - | 1 | - | 1 | - | 1 | 1 | 1 |
| Rheometer: | | | | | | | | | | | | | |
| | Test temperature (°C) | 150 | 150 | 150 | 150 | 150 | 150 | 150 | 150 | 150 | 150 | 150 | 150 |
| | $T_2$ (mins) | 4.0 | 3.6 | 2.5 | 2.0 | 11.0 | 7.6 | 6.3 | 3.2 | 7.0 | 4.5 | 2.8 | 3.4 |
| | $T_{95}$ (mins) | 11.0 | 11.0 | 9.4 | 11.5 | 55.0 | 30.5 | 15.0 | 11.5 | 22.0 | 19.5 | 9.3 | 10.5 |
| | Peak torque (in lb.) | 43.0 | 50.0 | 33.4 | 37.0 | 34.2 | 41.0 | 28.0 | 49.0 | 51.5 | 55.0 | 44.0 | 47.5 |

Table 11

| Master batch | Compound | 155 | 156 | 157 | 158 | 159 | 160 | 161 | 162 | 163 | 164 | 165 | 166 | 167 | 168 |
|---|---|---|---|---|---|---|---|---|---|---|---|---|---|---|---|
| D | S-dimethylamino-N-phenyl dithiocarbamate | 4 | 4 | | | | | | | | | | | | |
| D | S-(diethylamino)-di-n-butyl dithiocarbamate | | | 4 | 4 | | | | | | | | | | |
| D | S-(O,O'-diphenylphosphoramido)-o-n-butyldithiocarbonate | | | | | 4 | 4 | | | | | | | | |
| D | S-aminobenzoyl-di-dodecyl dithiocarbamate | | | | | | | 4 | | | | | | | |
| D | S-salicylidenamino thiobenzoate | | | | | | | | 4 | 4 | | | | | |
| D | S-salicylidenamino-N,N-diethyldithiocarbamate | | | | | | | | | | 4 | 4 | | | |
| D | S-[N-acetyl-N-tosyl]amino-N,N-diethyldithiocarbamate | | | | | | | | | | | | 4 | | |
| D | S-(diethylamino)-O,O-diethyl-dithiophosphonate | | | | | | | | | | | | | 4 | |
| D | S-(cyclohexylamino)-N,N-diethyl dithiocarbamate | | | | | | | | | | | | | | 4 |
| | Zinc diethyldithiocarbamate | - | 1 | - | 1 | - | 1 | 1 | - | 1 | - | 1 | - | - | - |
| | Rheometer | | | | | | | | | | | | | | |
| | Test temperature (°C) | 160 | 160 | 160 | 160 | 160 | 160 | 160 | 160 | 160 | 160 | 160 | 160 | 160 | 160 |
| | $T_2$ (mins) | 2.7 | 1.1 | 9.7 | 6.0 | 22.0 | 2.8 | 2.3 | 6.0 | 1.0 | 11.5 | 6.4 | 2.9 | 4.5 | 14.9 |
| | $T_{95}$ (mins) | 37.0 | 7.3 | 46.0 | 37.0 | 56.0 | 10.3 | 10.0 | 53.0 | 17.0 | 48.0 | 39.5 | 12.0 | 10.3 | 56.3 |
| | Peak torque (in lb.) | 35.0 | 62.5 | 28.8 | 36.4 | 13.4 | 40.0 | 30.5 | 18.0 | 58.0 | 35.8 | 45.0 | 33.5 | 41.4 | 36.0 |

Table 11 (Continued)

| Master batch | Compound | 169 | 170 | 171 | 172 | 173 | 174 | 175 | 176 | 177 | 178 | 179 | 180 | 181 | 182 |
|---|---|---|---|---|---|---|---|---|---|---|---|---|---|---|---|
| D | S-(piperidyl-N)-1,5-pentylene dithiocarbamate | 4 | 4 | | | | | | | | | | | | |
| D | S-(butyloxycarbonylamino) diethyl dithiocarbamate | | | 4 | 4 | | | | | | | | | | |
| D | S-diethylamino-N,N-dimethyl dithiocarbamate | | | | | 4 | 4 | | | | | | | | |
| D | S-benzoylamino-S'-cyclohexyl trithiocarbonate | | | | | | | 4 | 4 | | | | | | |
| D | S-piperidyl potassium thiosulphate | | | | | | | | | 4 | 4 | | | | |
| D | S-dimethylamino-2,2'-diethylene oxydithiocarbamate | | | | | | | | | | | 4 | 4 | | |
| D | Potassium-s-diethylamino thiosulphate | | | | | | | | | | | | | 4 | |
| D | Potassium-s-phenylamino thiosulphate | | | | | | | | | | | | | | 4 |
| | Zinc diethyldithiocarbamate | - | 1 | - | 1 | - | 1 | - | 1 | - | 1 | - | 1 | 1 | - |
| | Rheometer | | | | | | | | | | | | | | |
| | Test temperature (°C) | 160 | 160 | 160 | 160 | 160 | 160 | 160 | 160 | 160 | 160 | 160 | 160 | 160 | 160 |
| | $T_2$ (mins) | 4.3 | 3.3 | 1.9 | 1.6 | 7.1 | 4.7 | 12.2 | 7.0 | 10.7 | 3.0 | 5.9 | 3.8 | 1.8 | 1.7 |
| | $T_{95}$ (mins) | 11.5 | 10.0 | 6.7 | 7.6 | 25.0 | 26.3 | 23.5 | 15.7 | 41.0 | 10.5 | 21.8 | 20.2 | 9.0 | 12.5 |
| | Peak torque (in lb.) | 48.0 | 61.0 | 52.5 | 60.2 | 54.0 | 65.5 | 34.0 | 47.0 | 17.0 | 53.0 | 73.0 | 82.0 | 51.0 | 52.0 |

Table 12

| Master batch | Compound | 183 | 184 | 185 | 186 | 187 | 188 | 189 | 190 | 191 | 192 | 193 | 194 | 195 | 196 |
|---|---|---|---|---|---|---|---|---|---|---|---|---|---|---|---|
| A | S-(N',N'-diethylthioureido)-di-n-butyl dithiocarbamate | 4 | 4 | | | | | | | | | | | | |
| A | S-(n-butoxythiocarbonylamino)-di-n-butyldithiocarbamate | | | 4 | 4 | | | | | | | | | | |
| A | N,N'-bis-(di-n-butyldithiocarbamoyl)-diethyleneglycol dicarbamate | | | | | 4 | 4 | | | | | | | | |
| A | di-(S-benzenesulphonylamino)-ethylenediamine-bis-(methyl-N-dithiocarbamate) | | | | | | | 4 | | | | | | | |
| A | di-(S-benzoylamino)ethylene diamine-bis-(N-methyl-N-dithiocarbamate) | | | | | | | | 4 | | | | | | |
| A | S-(dimethylamino)-diisopropyl dithiocarbamate | | | | | | | | | 4 | 4 | | | | |
| A | N,N'-bis-(dimethylaminothiothiocarbonyl)piperazine | | | | | | | | | | | 4 | 4 | | |
| A | S-(dimethylamino)-dicyclo hexyldithiocarbamate | | | | | | | | | | | | | 4 | |
| A | S-(salicylidenamino)-2,2'-diethyleneoxydithiocarbamate | | | | | | | | | | | | | | 4 |
| | Zinc diethyldithiocarbamate | - | 1 | - | 1 | - | 1 | 1 | 1 | - | 1 | - | 1 | 1 | 1 |
| | Rheometer | | | | | | | | | | | | | | |
| | Test temperature (°C) | 150 | 150 | 150 | 150 | 150 | 150 | 150 | 150 | 150 | 150 | 150 | 150 | 150 | 150 |
| | $T_2$ (mins) | 10.4 | 5.0 | 15.0 | 5.2 | 13.3 | 4.9 | 2.7 | 2.5 | 18.6 | 6.3 | 5.8 | 2.5 | 7.8 | 4.9 |
| | $T_{95}$ (mins) | 16.5 | 18.3 | 23.0 | 23.3 | 25.0 | 26.5 | 3.9 | 4.6 | 26.2 | 30.5 | 7.0 | 4.5 | 28.0 | 10.3 |
| | Peak torque (in lb.) | 22.0 | 36.3 | 20.3 | 34.5 | 18.8 | 34.5 | 29.4 | 43.0 | 31.0 | 53.0 | 26.5 | 54.0 | 45.0 | 41.0 |

Table 13

| Master batch | Compound | 197 | 198 | 199 | 200 | 201 | 202 | 203 | 204 | 205 | 206 | 207 | 208 | 209 | 210 | 211 | 212 | 213 | 214 |
|---|---|---|---|---|---|---|---|---|---|---|---|---|---|---|---|---|---|---|---|
| B | S-(N',N'-diethylthioureido)-di-n-butyldithiocarbamate | 4 | 4 | | | | | | | | | | | | | | | | |
| B | S-(n-butoxythiocarbonylamino)-di-n-butyldithiocarbamate | | | 4 | 4 | | | | | | | | | | | | | | |
| B | N,N'-bis-(di-n-butyldithio-carbamoyl)-diethyleneglycol dicarbamate | | | | | 4 | 4 | | | | | | | | | | | | |
| B | di-(S-benzenesulphonylamino)-ethylenediamine-bis-(methyl-N-dithiocarbamate) | | | | | | | 4 | 4 | | | | | | | | | | |
| B | di-(S-benzoylamino)ethylene diamine-bis-(N-methyl-N-dithiocarbamate) | | | | | | | | | 4 | 4 | | | | | | | | |
| B | S-(dimethylamino)diisopropyl dithiocarbamate | | | | | | | | | | | 4 | 4 | | | | | | |
| B | N,N'-bis-(dimethylaminothio-thiocarbonyl)piperazine | | | | | | | | | | | | | 4 | 4 | | | | |
| B | S-(dimethylamino)dicyclo hexyldithiocarbamate | | | | | | | | | | | | | | | 4 | 4 | | |
| B | S-(salicylidenamino)-2,2'-diethyleneoxydithiocarbamate | | | | | | | | | | | | | | | | | 4 | 4 |
| | Zinc diethyldithiocarbamate | - | 1 | - | 1 | - | 1 | - | 1 | - | 1 | - | 1 | - | 1 | - | 1 | - | 1 |
| | Rheometer | | | | | | | | | | | | | | | | | | |
| | Test temperature (°C) | 160 | 160 | 160 | 160 | 160 | 160 | 160 | 160 | 160 | 160 | 160 | 160 | 160 | 160 | 160 | 160 | 160 | 160 |
| | $T_2$ (mins) | 12.3 | 3.5 | 26.0 | 5.0 | 12.5 | 5.1 | 5.4 | 2.5 | 22.3 | 2.4 | 12.3 | 4.5 | 5.9 | 2.5 | 12.7 | 5.5 | 16.3 | 5.5 |
| | $T_{95}$ (mins) | 48.0 | 26.5 | 55.5 | 40.5 | 49.0 | 42.5 | 54.5 | 11.0 | 56.5 | 9.8 | 26.0 | 24.3 | 76.0 | 76.0 | 48.0 | 21.7 | 49.0 | 18.0 |
| | Peak torque (in lb.) | 25.5 | 47.5 | 23.3 | 34.5 | 25.5 | 42.0 | 40.0 | 51.4 | 31.0 | 66.0 | 32.8 | 71.0 | 43.0 | 57.5 | 27.3 | 54.5 | 29.8 | 56.0 |

Example 215

This example compares the properties of a natural rubber cross-linked by the compound of Example 38 above, with a tetramethylthiuram disulphide (TMTD) cured rubber and two rubbers cured by a sulphur/cyclohexylbenzthiazyl sulphenamide system.

The results show that the compound of Example 38 gives an advantage over TMTD in greater processing safety and over the sulphur system in heat ageing and resistance to compression set.

The additives in the table were added to the base mix in the amounts indicated, mixed on a roll at 70°C and vulcanised in a press at 150°C for the time to 95% peak torque ($T_{95}$) measured by a rheometer at that temperature.

Base Mix

| | |
|---|---|
| Natural rubber (SMR 5) | 100.0 |
| Zinc oxide | 3.5 |
| Stearic acid | 3.0 |
| HAF Black | 45.0 |
| Process Oil | 3.5 |

| | Mix No.1 | Mix No.2 | Mix No.3 | Mix No.4 |
|---|---|---|---|---|
| Tetramethylthiurum disulphide | 3.0 | - | - | - |
| N(dimethyldithic carbamoyl)dimethylamine | - | 4.0 | - | - |
| N-cyclohexyl-2-benz-thiazyl sulphenamide | - | - | 4.0 | 0.5 |
| Sulphur | - | - | 0.5 | 2.5 |
| Mooney Scorch 120°C (mins. to min.+10 value) | 11.5 | 63.5 | 44.0 | 32.5 |
| Rheometer at 150°C | | | | |
| $T_2$ (minutes) | 3.0 | 11.0 | 8.0 | 4.4 |
| $T_{95}$ (minutes) | 16.0 | 30.0 | 16.0 | 14.0 |
| Peak torque (in lb.) | 51.0 | 50.0 | 57.0 | 72.0 |
| Unaged properties (cured to $T_{95}$) | | | | |
| Tensile strength ($Mn/m^2$) | 24.0 | 24.0 | 27.0 | 28.0 |
| Elongation at break (%) | 570 | 580 | 605 | 595 |
| Modulus at 200% ($Mn/m^2$) | 4.4 | 4.0 | 4.4 | 5.2 |
| Crescent Tear (N/2.5 mm) | 250 | 220 | 258 | 304 |
| Hardness BS° | 57 | 57 | 57 | 63 |
| Resilience % | | | | |
| Room Temperature | 57 | 57 | 56 | 63 |
| 50°C | 58 | 58 | 63 | 64 |
| Compression Set (25% compression) | | | | |
| % set after 24 hrs at 70°C | 18.3 | 14.3 | 16.0 | 20.1 |
| % set after 70 hours at 100°C | 28.8 | 27.1 | 50.1 | 66.0 |
| Oven Ageing 100°C % retained tensile strength after ageing | | | | |
| for 2 days | 92 | 88 | 82 | 18 |
| 4 days | 79 | 75 | 59 | 14 |
| 6 days | 71 | 67 | 56 | 13 |
| 8 days | 54 | 58 | 37 | P |
| 10 days | 50 | 50 | 33 | P |

P = perished

Example 216

This example is a similar comparison to Example 215, but using a typical styrene-butadiene rubber. A vulcanisation temperature of 160°C was used and again advantages in processing safety, heat ageing and resistance to compression set are found.

Base Mix

| | |
|---|---|
| Styrene/butadiene rubber (Solprene 1204) | 100 |
| Zinc oxide | 5 |
| Stearic acid | 1 |
| HAF Black | 50 |

| | Mix No. | | | |
|---|---|---|---|---|
| | 1 | 2 | 3 | 4 |
| Tetramethylthiuram disulphide | 3.0 | - | - | - |
| N(N'-dimethyldithiocarbamoyl) dimethylamine | - | 4.0 | - | - |
| N-cyclohexyl-2-benzthiazyl sulphenamide | - | - | 4.0 | 1.2 |
| Sulphur | - | - | 0.5 | 1.8 |
| Mooney Scorch 130°C (minutes to min.+ 10 value) | 5.0 | 34.75 | 46.25 | 42.50 |
| Rheometer 165°C | | | | |
| $T_2$ (minutes) | 2.0 | 7.2 | 8.5 | 7.3 |
| $T_{95}$ (minutes) | 9.0 | 25.0 | 17.0 | 22.0 |
| Peak torque (in lb.) | 78.0 | 78.0 | 75.0 | 97.0 |
| Unaged Properties | | | | |
| Tensile strength ($Mn/m^2$) | 24.0 | 25.0 | 26.0 | 26.0 |
| Elongation at Break (%) | 485 | 475 | 540 | 425 |
| Modulus at 200% ($Mn/m^2$) | 6.0 | 6.8 | 6.0 | 9.2 |
| Hardness BS° | 68 | 69 | 68 | 74 |
| Resilience at RT (%) | 51 | 52 | 68 | 74 |
| Resilience at 50°C (%) | 52 | 53 | 52 | 56 |
| Compression Set (25% compression) | | | | |
| % set after 24 hrs at 100°C | 20 | 12 | 41 | 46 |
| % set after 70 hrs at 100°C | 26 | 22 | 49 | 60 |
| Oven ageing 120°C | | | | |
| % retained elongation at break after: | | | | |
| 3 days | 72 | 71 | 48 | 35 |
| 5 days | 61 | 63 | 40 | 24 |
| 7 days | 57 | 53 | 32 | 21 |
| 10 days | 43 | 38 | 15 | 12 |
| 12 days | 35 | 27 | 13 | 12 |

The compounds used in the above Examples were obtained as follows:

1. S-benzenesulphonylamino-diethyldithiocarbamate - by reaction of S-aminodiethyldithiocarbamate with benzene sulphonyl chloride.

3. S-benzoylaminodiethyldithiocarbamate - by reaction of S-aminodiethyldithiocarbamate with benzoyl chloride.

5. Potassium-S-benzoylaminothiosulphate - by reaction of benzoyl chloride with potassium-S-aminothiosulphate.

7. S-benzenesulphonylaminothiobenzoate - by reaction of benzene sulphonyl chloride with S-aminothiobenzoate.

9. S-benzenesulphonylaminodithiobenzoate - by reaction of benzene sulphonyl chloride with S-aminodithiobenzoate.

11. S-octanoylaminodiethyldithiocarbamate - by reaction of octanoyl chloride with S-aminodiethyldithiocarbamate.

13. S-acetylaminodiethyldithiocarbamate - by reaction of acetyl chloride with S-aminodiethyldithiocarbamate.

15. 1,4-bis[(diethylthiocarbamoylthio)carbamoyl]butane - by reaction of adipoyl chloride with S-aminodiethyldithio carbamate.

17. S-benzoylamino-di-n-butyldithiocarbamate - by reaction of benzoyl chloride with S-amino-di-n-butyldithiocarbamate.

19. S-benzoylaminophenylmethyldithiocarbamate - by reaction of benzoyl chloride with S-aminophenylmethyl dithiocarbamate.

21. S-benzoylamino-(2,2'-diethyleneoxy)dithiocarbamate - by reaction of benzoyl chloride with S-amino-(2,2'-diethylene oxy)dithiocarbamate.

23. S-benzoylamino-(1,5-pentamethylene)dithiocarbamate - by reaction of benzoyl chloride with S-amino-(1,5-penta methylene)dithiocarbamate.

25. S-benzenesulphonylaminodibutyldithiocarbamate - by reaction of benzenesulphonyl chloride with S-amino-di-n-butyldithiocarbamate.

27. S-benzenesulphonylaminophenylmethyldithiocarbamate - by reaction of benzenesulphonyl chloride with S-aminophenylmethyldithiocarbamate.

29. S-benzenesulphonylamino-(2,2'-diethyleneoxy) dithiocarbamate - by reaction of benzenesulphonyl chloride with S-amino-(2,2'-diethyleneoxy)dithiocarbamate.

31. S-benzenesulphonylamino-(1,5-pentamethylene) dithiocarbamate - by reaction of benzenesulphonyl chloride with S-amino-(1,5-pentamethylene)dithiocarbamate.

33. S-methylsulphonylamino-di-n-butyldithiocarbamate - by reaction of methanesulphonyl chloride with S-amino-di-n-butyldithiocarbamate.

35. S-(m-nitrophenylsulphonylamino)-(1,5-pentamethylene) dithiocarbamate - by reaction of m-nitrophenylsulphonyl chloride with S-amino-(1,5-pentamethylene)dithiocarbamate.

37. N-[S-(morpholinothiocarbonyl)thio]morpholine - commercially available as "Curerite 18"

38. S-(dimethylthiocarbamoyl)-N,N-dimethylthiohydroxyl amine - by reaction of sodium dimethyldithiocarbamate, dimethylamine and iodine.

40. S-(diethylthiocarbamoyl)-N,N-diethylthiohydroxyl amine - as per J.Org.Chem. 14 935-945 (1949).

42. S-(diethylthiocarbamoyl)-N,N-dimethylthiohydroxyl amine - as per J.Org.Chem. 14 935-945 (1949).

44. O-ethyl-S-(diethylamino)dithiocarbonate - by reaction of potassium O-ethyldithiocarbonate, iodine and diethyl amine.

46. S-dibenzoylamino-O-ethyldithiocarbonate - by reaction of benzoyl chloride with S-amino-O-ethyldithiocarbonate.

48. N-(diethyldithiocarbamoyl)phthalimide - by reaction of sodium diethyldithiocarbamate with N-bromophthalimide.

50. O-ethyl-S-phthalimidodithiocarbonate - by reaction of potassium O-ethyldithiocarbonate with N-bromophthalimide.

84. S-methanesulphonylamino-O-butyldithiocarbonate - by reaction of methanesulphonyl chloride with S-amino-O-n-butyldithiocarbonate.

86. S-benzenesulphonylamino-O-nonyldithiocarbonate - by reaction of benzenesulphonyl chloride with S-amino-O-n-nonyldithiocarbonate.

87. 1,4-di[(S-tosylamino)dithiocarbonato-O-]butane - by reaction of p-toluenesulphonyl chloride with 1,4-bis-(S-aminodithiocarbonato-O-)butane.

88. S-octanoylamino-O-butyldithiocarbonate - by reaction of octanoyl chloride with S-amino-O-n-butyldithiocarbonate.

89. S-benzenesulphonylamino-O-isopropyldithiocarbonate - by reaction of benzenesulphonylchloride with S-amino-O-isopropyldithiocarbonate.

90. N,N'-di(O-butyldithiocarbonato)adipamide - by reaction of adipoyl chloride with S-amino-O-n-butyldithiocarbonate.

91. 1,4-di[(S-benzoylamino)dithiocarbonato-O-]butane - by reaction of benzoylchloride with 1,4-di(S-aminodithio carbonato-O-)butane.

92. 1,4-di[(S-octanoylamino)dithiocarbonato-O-]butane - by reaction of octanoyl chloride with 1,4-di-(S-aminodithio carbonato-O-)butane.

93. 1,4-di[(S-methanesulphonylamino)dithiocarbonato-O-] butane - by reaction of methanesulphonyl chloride with 1,4-di-(S-aminodithiocarbonato-O-)butane.

95. 4,4'-di(diethyldithiocarbamoylaminosulphonyl) diphenylmethane - by reaction of 4,4'-diphenylmethane-disulphonyl chloride with S-aminodiethyldithiocarbamate.

97. S-benzenesulphonylamino-O-ethyldithiocarbonate - by reaction of benzenesulphonyl chloride with S-amino-O-ethyldithiocarbonate.

98. S-benzoylamino-O-nonyldithiocarbonate - by reaction of benzoyl chloride with O-n-nonyl-S-aminodithiocarbonate.

99. 4,4'-bis[N-(diethyldithiocarbamoyl)aminosulphonyl] diphenylether - by reaction of 4,4'-diphenylether disulphonyl chloride with S-amino-diethyldithiocarbamate.

101. p-(N',N'-diethyldithiocarbamoyl)aminocarbonyl benzoic acid - by reaction of terephthoyl chloride with S-aminodiethyldithiocarbamate.

131. N,N'-bis[S-(benzoylamino)dithiocarbonyl]piperazine - by reaction of benzoyl chloride with N,N'-bis-(S-amino dithiocarbonyl)piperazine.

133. S,S'-bis-(benzoylamino)dithioterephthalate - by reaction of benzoyl chloride with S,S'-diaminodithio-terephthalate.

134. S-dimethylamino-N-phenyldithiocarbamate - by method of J.Org.Chem. 14 935-945 (1949)

136. S-(N',N'-diethylamino)-di-n-butyldithiocarbamate - by the method of US Patent 3880836.

138. S-(O,O'-diphenylphosphoramido)-O-n-butyldithio carbonate - by reaction of O,O'-diphenylphosphoryl chloride with S-amino-O-n-butyldithiocarbonate.

139. S-salicylidenamino-N,N-diethyldithiocarbamate - by reaction of salicylaldehyde with S-aminodiethyldithio carbamate.

140. S-[N'-acetyl-N'-tosylamino]-N,N-diethyldithiocarbamate - by reaction of sodium diethyldithiocarbamate, sodium hypochlorite and N-acetyl-p-toluenesulphonamide.

141. S-diethylamino-O,O'-diethyldithiophosphonate - by reaction of sodium diethyldithiophosphonate, iodine and diethylamine.

142. S-(cyclohexylamino)diethyldithiocarbamate - by method of US Patent No.2381392.

143. S-(piperidyl-N-)1,5-pentamethylene dithiocarbamate - by method of US Patent 3880836.

145. S-(butoxycarbonylamino)diethyldithiocarbamate - by reaction of n-butylchloroformate with S-aminodiethyldithio carbamate.

147. S-(diethylamino)dimethyldithiocarbamate - by method of J.Org.Chem. 14 935-945 (1949).

149. S-piperidyl potassium thiosulphate - by reaction of piperidine with S-amino potassium thiosulphate.

151. S-dimethylamino-2,2'-diethyleneoxydithiocarbamate - by method of US Patent No.3880836.

153. Potassium-S-diethylaminothiosulphate - by method of US Patent No.3880836.

154. Potassium-S-phenylaminothiosulphate - by method of US Patent No.3880836.

161. S-benzoylamino-di-dodecyldithiocarbamate - by reaction of benzoyl chloride with S-amino-di-n-dodecyldithio carbamate.

162. S-salicylidenaminothiobenzoate - by reaction of salicylaldehyde with S-aminothiobenzoate.

175. S-benzoylamino-S'-cyclohexyltrithiocarbonate - by reaction of S-amino-S'-cyclohexyltrithiocarbonate with benzoyl chloride.

183. S-(N',N'-diethylthioureido)-di-n-butyldithiocarbamate - by reaction of diethylcarbamoyl chloride with S-amino-di-n-butyldithiocarbamate.

185. S-(n-butoxythiocarbonylamino)-di-n-butyldithio carbamate - by reaction of n-butoxythiocarbonyl chloride with S-(di-n-butyldithiocarbamate.

187. N,N'-bis-(di-n-butyldithiocarbamoyl)diethylene glycoldicarbamate - by reactingddiethylene glycol dichloroformate with S-amino-di-n-butyldithiocarbamate.

189. di-(S-benzenesulphonylamino)ethylenediamine-bis-(N-methyl-N-dithiocarbamate) - by reaction of benzenesulphonyl chloride with N,N'-dimethyl-N,N'-di(S-aminodithiocarbonyl) ethylene diamine.

190. di-S-(benzoylamino)ethylene diamine-bis(N-methyl-N-dithiocarbamate) - by reaction of benzoyl chloride with N,N'-dimethyl-N,N'-di(S-aminodithiocarbonyl)ethylene diamine.

191. S-(dimethylamino)di-isopropyldithiocarbamate - by the method of US Patent 3880836.

193. N,N'-bis(dimethylaminothio-thiocarbonyl)piperazine - by reaction of di-potassium piperazine-bis-dithiocarboxylate, dimethylamine and iodine.

195. S-(dimethylamino)dicyclohexyldithiocarbamate - by the method of US Patent 3880836.

196. S-(salicylidenamino)-2,2'-diethyleneoxydithio carbamate - by the reaction of salicylaldehyde with S-amino-2,2'-diethyleneoxydithiocarbamate.

## CLAIMS

1. A process for the cross-linking of natural rubber and synthetic rubbers containing olefinic unsaturation in the absence of elemental sulphur or polysulphide compounds which can be used in place of sulphur in the vulcanisation process, characterised in that as cross-linking agent there is used a S-acyl derivative of a N-substituted thioamine or of a thioamide, the term "acyl" meaning the acid radical of an organic or inorganic acid having the group C=Y, P=Y or S=X where X is O or S and Y is O, S or an imide group, linked to the sulphur atom.

2. A process as claimed in claim 1 wherein the cross-linking agent is a compound of the formula:

$R^1.R^2N.CS.S.NR^4.R^5$ (1)

$R^1.R^2N.CS.S.NR^5.A.NR^5.S.CS.NR^2.R^1$ (2)

$R^4.R^5N.S.CS.NR^5.A.NR^5.CS.S.NR^4.R^5$ (3)

wherein $R^1$ represents an optionally substituted hydrocarbyl radical, $R^2$ represents H or an optionally substituted hydrocarbyl radical, A represents an alkylene, arylene or aralkylene linking group, $R^4$ and $R^5$ may be the same or different and each represents an acyl group or any of the meanings stated for $R^2$, any pair of $R^1$ and $R^2$ or $R^4$ and $R^5$ attached to a nitrogen atom can represent an alkylidene or arylidene radical, or together with the nitrogen atom can form a heterocyclic ring, or the radical $-NR^5.A.NR^5.-$ can form a N,N'-divalent heterocyclic radical.

BTS/BH
5.3.79.